# EUROPEAN PATENT APPLICATION

(11) **EP 2 144 418 A1**
(43) Date of publication of application: **13.01.2010**
(21) Application number: 08859406.4
(22) Date of filing: 19.11.2008
(51) Int. Cl.: H04L 29/06

(54) **A LABEL MANAGEMENT METHOD AND APPARATUS IN PBB-TE**

(30) Priority: 04.12.2007 CN 200710077491
(71) Applicant: Huawei Technologies Co., Ltd., Longgang District Shenzhen Guangdong 518129 (CN)
(72) Inventor: YI, Qiliang, Longgang District Shenzhen 518129 (CN)
(74) Representative: Kreuz, Georg Maria
(86) International application number: PCT/CN2008/073111
(87) International publication number: WO 2009/074045

(57) **Abstract**

A label management method and apparatus in provider backbone bridge-traffic engineering (PBB-TE) are provided. The method includes the following steps. A label server distributes a virtual local area network identifier (VID) to a network element and distributes a virtual destination media access control (DMAC) address to a port of the network element. The VID and the virtual DMAC address are combined to form a label when a label switched path (LSP) is being created in the PBB-TE. The method includes pre-distributing the virtual DMAC address, pre-requesting the virtual DMAC address, and dynamically reclaiming the virtual DMAC address. The demand of the increase of the number of the service (LSP) created in the PBB-TE network for the number of the labels can be met by distributing the virtual DMAC address. The label distribution efficiency is enhanced and the LSP establishing time, especially the LSP establishing time of rerouting in PBB-TE is shortened by pre-distributing the virtual DMAC address and pre-requesting the DMAC address.

## Description

### BACKGROUND OF THE INVENTION

### Field of the Technology

The present invention relates to data communication technologies, and more particularly to a label management method and apparatus in provider backbone bridge-traffic engineering (PBB-TE).

### Background of the Invention

PBB-TE is an emerging packet transmission technology. The PBB-TE makes certain improvements to Ethernet to enable the Ethernet to provide a connection-oriented network having a TE function, and strengthens operation, administration, and maintenance (OAM) and protection functions to enable the Ethernet to become a transport network having basic functions of an operator network. In the PBB-TE, the Ethernet forwards data, configures forwarding tables, and forms a connection-oriented label switched path (LSP) according to a unique label within a global or operator domain. The label in the PBB-TE consists of a virtual local area network identifier (VID) and a destination media access control (DMAC) address. The VID is usually 12 bits, and the DMAC address is usually 48 bits.

In the current label management modes, the label in the PBB-TE consists of a VID and a DMAC address of an Ethernet physical port.

However, since the largest number of the VIDs is 4094, and during the network operation, only a limited number of the VIDs are distributed to the PBB-TE for use instead of all the VIDs, and further, since the DMAC address of a physical device is fixed, when the label consists of a DMAC address and a VID, the labels may be insufficient with the increase of the number of the created service (LSP) in the PBB-TE network.

Meanwhile, as far as the operator's management is concerned, since the DMAC address of the physical device is decided by the device producer, the operator cannot control the address. As far as the network operation is concerned, the operator desires that the DMAC address distributed to the device is manageable and controllable.

### SUMMARY OF THE INVENTION

The present invention is particularly directed to a label management method and apparatus in PBB-TE, for realizing label distribution when the LSP is being created in the PBB-TE.

In an embodiment, the present invention provides a label management method in PBB-TE, which includes the following steps.

A label server distributes a VID for a network element, and distributes a virtual DMAC address to a port on the network element. The VID and the DMAC address are combined to form a label when an LSP is being created in the PBB-TE.

The present invention provides a label server, which includes a storage module and a sending module.

The storage module is adapted to store a set label distribution strategy, label distribution available space divided by the network operator on a network element, a VID, and a virtual DMAC address.

The sending module is adapted to distribute the VID stored in the storage module to the network element, and send the virtual DMAC address stored in the storage module to the network element according to the label distribution strategy and the label distribution available space divided by the network operator on the network element stored in the storage module.

The present invention provides a network element, which includes a receiving module and a generating module.

The receiving module is adapted to receive the VID and the virtual DMAC address distributed by the label server.

The generating module is adapted to combine the VID and the virtual DMAC address to form a label when the LSP is being created in the PBB-TE.

In the embodiment, the present invention further provides a label management system in PBB-TE, which includes a label server and a network element.

The label server is adapted to receive a request for distributing a virtual DMAC address initiated by the network element, store a set label distribution strategy, label distribution available space divided by the operator on the network element, a VID, and a virtual DMAC address, distribute the stored VID to the network element, and send the stored virtual DMAC address to the network element according to the stored label distribution strategy and the stored label distribution available space divided by the network operator on the network element after receiving the request for distributing a virtual DMAC address initiated by the network element.

The network element is adapted to receive the VID and the virtual DMAC address distributed by the label server, and to combine the VID and the virtual DMAC address to form a label when the LSP is being created in the PBB-TE.

According to the method of the present invention, the demand of the increase of the number of the service (LSP) created in the PBB-TE network for the number of the labels can be met by distributing the virtual DMAC address; and the label distribution efficiency is enhanced and the LSP establishing time in the PBB-TE is shortened by pre-distributing the virtual DMAC address and pre-requesting the DMAC address.

### BRIEF DESCRIPTION OF THE DRAWINGS

FIG. 1 is a schematic view of pre-distributing a virtual DMAC address according to an embodiment of the present invention;
FIG. 2 is a schematic view of pre-requesting a virtual DMAC address according to an embodiment of the present invention;
FIG. 3 is a schematic view of reclaiming the virtual DMAC address after an LSP② 5 in the schematic view of pre-requesting a virtual DMAC address is deleted according to an embodiment of the present invention;
FIG. 4 is a schematic view of a label server after failure according to an embodiment of the present invention;
FIG. 5 is a schematic view of a composition of a label server according to an embodiment of the present invention;
FIG. 6 is a schematic view of a composition of a network element according to an embodiment of the present invention; and
FIG. 7 is a schematic structural view of a label management system in PBB-TE according to an embodiment of the present invention.

### DETAILED DESCRIPTION OF THE EMBODIMENTS

In an embodiment of the present invention, a label management method in PBB-TE is provided, which includes the following steps. A label server distributes a VID for a network element and distributes a virtual DMAC address to a port on the network element, in which the distributing a virtual DMAC address may mean distributing one or more virtual DMAC addresses to each port on the network element, or distributing one or more virtual DMAC addresses to a predetermined port on the network element. The VID and the virtual DMAC address are combined to form a label when the LSP is being created in the PBB-TE.

The distribution mode of distributing the VID for the network element by the label server is described as follows. The label server distributes a portion of the VID to the network element according to the label distribution strategy, in which the distributing a portion of the VID to the network element may mean distributing a portion of the VID to the predetermined network element, such as distributing VID: 1-8 to the network element, and the VID is adapted to form a label in the PBB-TE.

The label is a value consisting of a VID and a virtual DMAC address. When the network element is started, the label server previously distributes a corresponding number of virtual DMAC addresses to a port on the network element according to the label distribution strategy and the label distribution available space divided by the operator on the network element. On the network element, the received data packet is decided to be forwarded to which port according to the value of the label (VID+DMAC).

A detailed description is given below with specific implementations.

When an LSP is being created, the network element where a traffic flow destination port is located requests a label from the label server, and the label server delivers the virtual DMAC address distributed to the traffic flow destination port to the network element initiating the request, in which the virtual DMAC address and one unused VID in the VIDs distributed to the network element initiating the request are combined to form a label of the LSP.

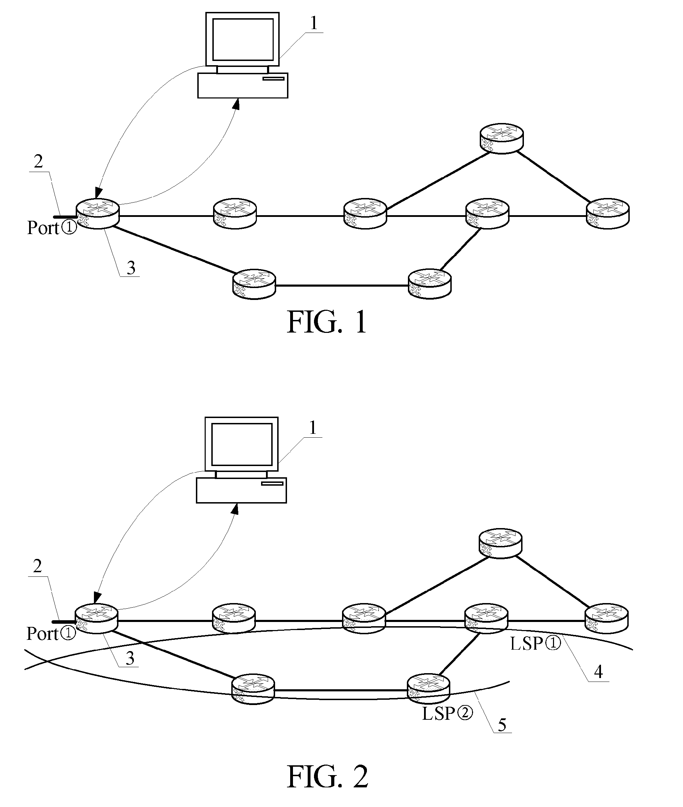

FIG. 1 is a schematic view of pre-distributing a virtual DMAC address. In the process of the network initialization, for example, after a certain network element 3 is started, the network element finds that it does not save the virtual DMAC address used for label distribution and initiates a virtual DMAC address distribution request to a label server 1. After receiving the request, the label server 1 pre-distributes a corresponding virtual DMAC address to a port on the network element according to a label distribution strategy and label distribution available space divided by an operator on the network element. The label distribution strategy includes distributing, by the label server, a set number of virtual DMAC addresses to the port on the network element that requests the distributing of virtual DMAC addresses according to the number of virtual DMAC addresses distributed to the port on the network element set by the user, or distributing, by the label server, a corresponding number of virtual DMAC addresses to the port on the network element that requests the distributing of virtual DMAC addresses according to a requested number of virtual DMAC addresses to be distributed carried in a message requesting for distributing virtual DMAC addresses. When a certain port request the distributing of virtual DMAC addresses, the user can set the number of the addresses being distributed to the port each time to be four according to the operation demands.

FIG. 2 is a schematic view of pre-requesting a virtual DMAC address. Four virtual DMAC addresses (MAC1-MAC4) are pre-distributed to a Port① 2. With the creation of the service in the network, two LSPs (an LSP① 4 and an LSP② 5) use the Port① 2 as the destination port.

An MAC1 and an MAC2 on the Port① 2 are respectively distributed to the LSP① 4 and the LSP② 5 to form a label. The user further configures a port configuration strategy according to the operation demands, which includes setting a threshold value of the number of the virtual DMAC addresses pre-distributed to the port on the network element, and requesting the label server to distribute the virtual DMAC addresses when the number of available virtual DMAC addresses saved by the port on the network element is less than or equal to the set threshold value, for example, setting to request for distributing virtual DMAC addresses when the number of the virtual DMAC addresses saved on the Port① 2 and adapted to form a label reaches 50% of the number of the pre-distributed virtual DMAC addresses or below. Since the number of the virtual DMAC addresses adapted to form a label now on the Port① 2 is only two, which only accounts for 50% of the number of the pre-distributed virtual DMAC addresses (it is necessary to explain that 50% is only exemplary in the embodiment, and the amount can be different in other embodiments), the network element 3 again sends a virtual DMAC address distribution request for distributing virtual DMAC addresses to the Port① 2 according to the port configuration strategy configured by the user. After receiving the request, the label server 1 distributes a new corresponding number of virtual DMAC addresses (MAC5 and MAC6) to the Port① 2 according to the label distribution strategy, and delivers the addresses to the network element 3. At the moment, available virtual DMAC addresses of the Port① 2 on the network element 3 are MAC3-MAC6, and used virtual DMAC addresses are MAC1 and MAC2.

The embodiment shows that the network element initiatively reports a virtual DMAC address distribution request to the label server 1. Obviously, in other implementations, the label server can also take initiative to detect whether the network element has sufficient virtual DMAC addresses used for label distribution. Since the distribution modes are substantially the same, detailed description will not be made herein.

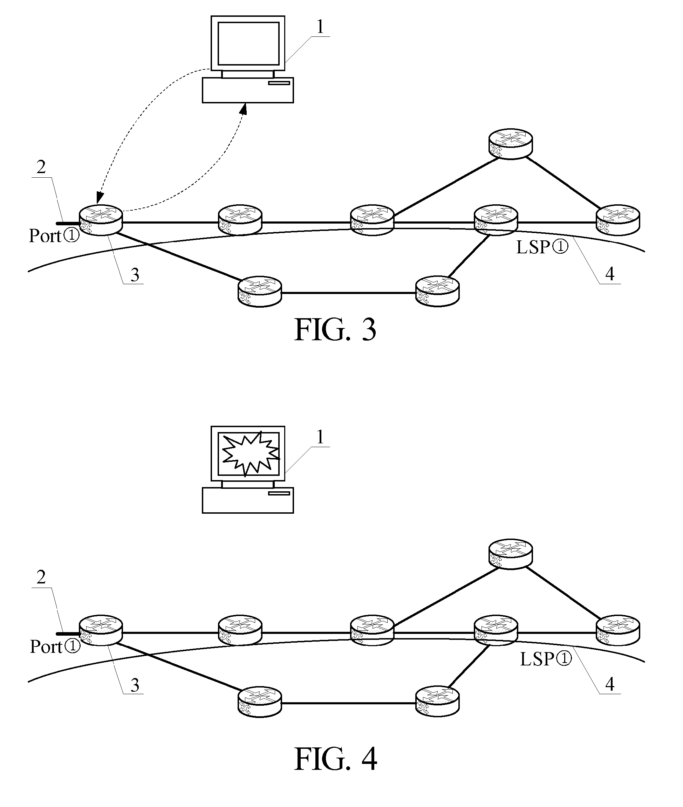

In another embodiment of the present invention, since the service is dynamic, the LSP② 5 (see FIG. 2) is deleted after running a period of time. FIG. 3 illustrates a schematic view of reclaiming a virtual DMAC address after the LSP② 5 is deleted.

With the deletion of the LSP② 5, a label corresponding to the LSP② 5 is released, and at the moment, a virtual DMAC address (MAC2) on the Port① 2 can be reclaimed and reused. After the MAC2 is reclaimed, a network element 3 where a corresponding port (the Port① 2) is located can feedback a message of the reclaim of the MAC2 to the label server 1. The label server 1 can reuse the MAC2 after receiving the message, for example, it can subsequently distribute the MAC2 to other ports, and then available virtual DMAC addresses on the Port① 2 of the network element 3 are MAC3-MAC6. Or, the network element 3 saves the MAC2 for its own use, and then available virtual DMAC addresses on the Port① 2 of the network element 3 are MAC2-MAC6.

In yet another embodiment of the present invention, a certain abnormality causes the label server 1 to fail, so the virtual DMAC addresses cannot be distributed. FIG. 4 illustrates a schematic view of a label server after failure.

The number of the currently available virtual DMAC addresses on the Port① 2 is five, so even if the label server 1 fails, at least five LSPs using the Port① 2 as a destination port can be created through the pre-distributed virtual DMAC addresses.

According to the label management method in the embodiments of the present invention, the demands of the increase of the number of the service (LSP) created in the PBB-TE network for the number of the labels can be met by distributing the virtual DMAC address; and the label distribution efficiency is enhanced and the LSP establishing time in the PBB-TE is shortened by pre-distributing the virtual DMAC address and pre-requesting the DMAC address.

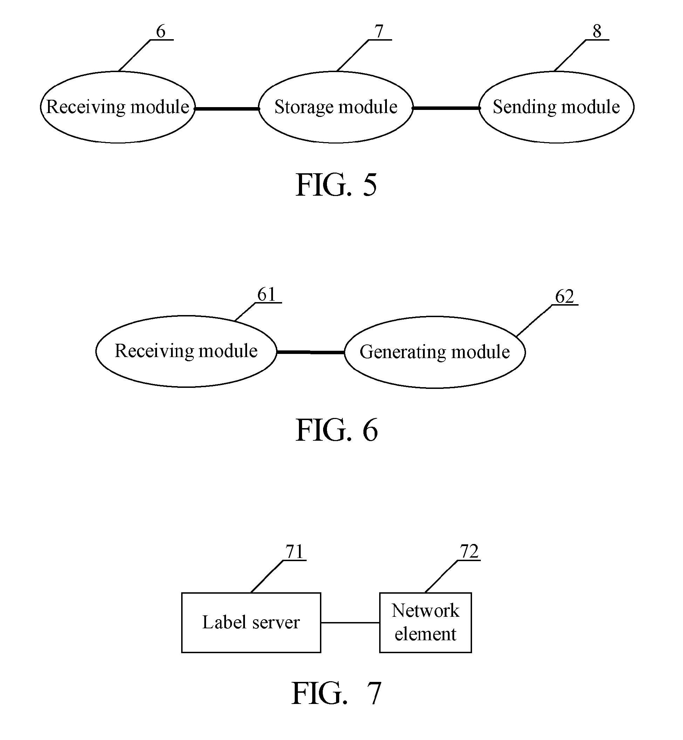

Accordingly, the method according to the present invention relates to a label server, and the label server includes a storage module 7 and a sending module 8, as shown in FIG. 5.

The storage module 7 is adapted to store a set label distribution strategy, label distribution available space divided by the network operator on a network element, a VID, and a virtual DMAC address.

The sending module 8 is adapted to distribute the VID stored in the storage module 7 to the network element, and send the virtual DMAC address stored in the storage module 7 to the network element according to the label distribution strategy and the label distribution available space divided by the network operator on the network element stored in the storage module 7.

Additionally, the label server further includes a receiving module 6.

The receiving module 6 is adapted to receive a request for distributing the virtual DMAC address initiated by the network element.

At the moment, the sending module 8 is specifically adapted to distribute the VID stored in the storage module 7 to the network element, and send the virtual DMAC address stored in the storage module 7 to the network element according to the label distribution strategy and the label distribution available space divided by the network operator on the network element stored in the storage module 7 after receiving the request for distributing virtual DMAC addresses received by the receiving module.

In the label server according to the embodiments of the present invention, the demands of the increase of the number of the service (LSP) created in the PBB-TE network for the number of the labels can be met by distributing the virtual DMAC address; and the label distribution efficiency is enhanced and the LSP establishing time in the PBB-TE is shortened by pre-distributing the virtual DMAC address and pre-requesting the DMAC address.

Accordingly, the present invention further relates to a network element, and the network element includes a receiving module 61 and a generating module 62, as shown in FIG. 6.

The receiving module 61 receives a VID and a virtual DMAC address distributed by the label server.

The generating module 62 combines the VID and the virtual DMAC address to form a label.

The network element further includes a storage module, a determination module, and a sending module.

The storage module is adapted to store a set port distribution strategy, and a VID and a virtual DMAC address pre-distributed by a label server and adapted to form a label.

The determination module is adapted to determine whether to send a request for distributing a virtual DMAC address to the label server according to the port distribution strategy of the storage module.

The sending module is adapted to send the request for distributing a virtual DMAC address to the label server when a determination result of the determination module is "yes."

Additionally, the storage module is further adapted to reclaim the released virtual DMAC address to reuse the address and feedback the information to the label server.

In an embodiment, the present invention further provides a label management system in PBB-TE. Referring to FIG. 7, the system includes a label server 71 and a network element 72.

The label server 71 is adapted to receive a request for distributing a virtual DMAC address initiated by a network element 72, store a set label distribution strategy, label distribution available space divided by an operator on the network element 72, a VID, and a virtual DMAC address, distribute the stored VID to the network element 72, and send the stored virtual DMAC address to the network element 72 according to the stored label distribution strategy and the stored label distribution available space divided by the network operator on the network element 72 after receiving the request for distributing a virtual DMAC address initiated by the network element 72.

The network element 72 is adapted to receive the VID and the virtual DMAC address distributed by the label server 71, and to combine the VID and the virtual DMAC address to form a label when the LSP is being created in a PBB-TE.

In conclusion, according to the embodiments of the present invention, the demand of the increase of the number of the service created in the PBB-TE network for the number of the labels can be met by distributing the virtual DMAC address to the port on the network element; and the label distribution efficiency is enhanced and the LSP establishing time in the PBB-TE is shortened by pre-distributing virtual a DMAC address and pre-requesting the DMAC address.

Through the description in the detailed description, it is clear to persons skilled in the art that the present invention may be accomplished through hardware, or through software plus necessary universal hardware platform. Base on this, the technical solutions of the present invention may be embodied in the form of a software product. The software product may be stored in a nonvolatile storage media (such as, CD-ROM, USB flash drive, and removable hard disk) and contain several instructions adapted to instruct a computer equipment (such as, a personal computer, a server, or a network equipment) to perform the method according to the embodiments of the present invention.

To sum up, the descriptions are merely several embodiments of the present invention, but not intended to limit the protection scope of the present invention. Any modification, equivalent replacement, and improvement made without departing from the principle of the present invention fall within the protection scope of the present invention.

## Claims

1. A label management method in provider backbone bridge-traffic engineering (PBB-TE), comprising:
distributing, by a label server, a virtual local area network identifier (VID) for a network element, and distributing a virtual destination media access control (DMAC) address to a port on the network element, wherein the VID and the virtual DMAC address are combined to form a label when a label switched path (LSP) is being created in the PBB-TE.

2. The method according to claim 1, wherein the distributing the DMAC address to the port on the network element specifically comprises:
distributing one or more virtual DMAC addresses to each port on the network element; or
distributing one or more virtual DMAC addresses to a predetermined port on the network element.

3. The method according to claim 1, wherein when the network element is started, the label server previously distributes a corresponding number of virtual DMAC addresses to the port on the network element according to a label distribution strategy and label distribution available space divided by an operator on the network element.

4. The method according to claim 1, further comprising:
receiving, by the label server, a virtual DMAC address distribution request sent by the network element according to a port configuration strategy configured by a user; and
distributing a corresponding number of virtual DMAC addresses to the port on the network element according to a label distribution strategy.

5. The method according to claim 4, wherein the port configuration strategy configured by the user comprises: setting a threshold value of the number of the virtual DMAC addresses pre-distributed to the port on the network element; and requesting the label server to distribute the virtual DMAC addresses when the number of available virtual DMAC addresses saved by the port on the network element reaches the set threshold value.

6. The method according to any one of claims 3-5, wherein the label distribution strategy comprises: distributing, by the label server, a set number of virtual DMAC addresses to the port on the network element that requests the distributing of virtual DMAC addresses according to the number of virtual DMAC addresses distributed to the port on the network element set by the user; or
distributing, by the label server, a corresponding number of virtual DMAC addresses to the port on the network element that requests the distributing of virtual DMAC addresses according to a requested number of virtual DMAC addresses to be distributed carried in a message requesting for distributing virtual DMAC addresses.

7. The method according to claim 1, further comprising: releasing a virtual DMAC address corresponding to the label of the LSP when the LSP is deleted or fails; and reusing the released virtual DMAC address by the network element where a port that releases the virtual DMAC address is located, or reusing the released virtual DMAC address by the label server.

8. A label server, comprising:
a storage module, adapted to store a set label distribution strategy, label distribution available space divided by an operator on a network element, a virtual local area network identifier (VID), and a virtual destination media access control (DMAC) address; and
a sending module, adapted to distribute the VID stored in the storage module to the network element, and send the virtual DMAC address stored in the storage module to a port on the network element according to the label distribution strategy and the label distribution available space divided by the network operator on the network element stored in the storage module.

9. The label server according to claim 8, further comprising:
a receiving module, adapted to receive a request for distributing a virtual DMAC address sent by the network element according to a port configuration strategy configured by a user;
wherein the sending module is specifically adapted to distribute the VID stored in the storage module to the network element, and send the virtual DMAC address stored in the storage module to the network element according to the label distribution strategy and the label distribution available space divided by the network operator on the network element stored in the storage module after receiving the request for distributing a virtual DMAC address received by the receiving module.

10. A network element, comprising:
a receiving module, adapted to receive a virtual local area network identifier (VID) and a virtual destination media access control (DMAC) address distributed by a label server; and
a generating module, adapted to combine the VID and the virtual DMAC address to form a label when a label switched path (LSP) is being created in provider backbone bridge-traffic engineering (PBB-TE).

11. The network element according to claim 10, further comprising:
a storage module, adapted to store a set port distribution strategy, and a VID and a virtual DMAC address pre-distributed by a label server and adapted to form a label;
a determination module, adapted to determine whether to send a request for distributing a virtual DMAC address to the label server according to the port distribution strategy stored in the storage module; and
a sending module, adapted to send the request for distributing a virtual DMAC address to the label server when a determination result of the determination module is "yes."

12. A label management system in provider backbone bridge-traffic engineering (PBB-TE), comprising: a label server and a network element;
wherein the label server is adapted to receive a request for distributing a virtual destination media access control (DMAC) address initiated by the network element, store a set label distribution strategy, label distribution available space divided by an operator on the network element, a virtual local area network identifier (VID), and a virtual DMAC address, distribute the stored VID for the network element, and send the stored virtual DMAC address to the network element according to the stored label distribution strategy and the stored label distribution available space divided by the network operator on the network element after receiving the request for distributing a virtual DMAC address initiated by the network element; and
the network element is adapted to receive the VID and the virtual DMAC address distributed by the label server, and to combine the VID and the virtual DMAC address to form a label when a label switched path (LSP) is being created in a PBB-TE.

13. A computer readable storage medium, comprising a computer program code,
wherein the computer program code is implemented through a computer processor, and triggers the computer processor to implement the method according to any one of claims 1-5.
